# EUROPEAN PATENT APPLICATION

(11) **EP 4 474 234 A1**
(43) Date of publication of application: **11.12.2024**
(21) Application number: 23178362.2
(22) Date of filing: 09.06.2023
(51) Int. Cl.: B60T 13/74, B60T 8/17, B60T 8/171, B60T 8/172, B60T 17/22, F16D 66/00, F16D 121/24

(54) **BRAKE ACTUATOR, COMPUTER-IMPLEMENTED METHOD, COMPUTER PROGRAM, NON-VOLATILE DATA CARRIER AND BRAKE SYSTEM FOR A RAIL VEHICLE**

(71) Applicant: Dellner Bubenzer AB, 781 70 Borlänge (SE)
(72) Inventor: SLUTEJ, Davor, 724 82 Västerås (SE); PRIM, Viktor, 811 61 Sandviken (SE)
(74) Representative: Brann AB

(57) **Abstract**

In a rail vehicle (100), a brake actuator (120) receives a brake command (BC) specifying a target force. In response to the brake command (BC), the brake actuator (120) control an electrically operated brake unit (130) to perform a braking operation. The brake actuator contains a control unit that generates a brake control signal (BS) based on the brake command (BC). The brake control signal (BS), in turn, controls an electric motor (131) in the electrically operated brake unit (130), such that an output shaft of the electric motor (131) attains a specified angular position (P) in which at least one pressing member (135) is caused to apply a force against a rotating member (136) being mechanically connected to a wheel axle (141) of the rail vehicle (100). The control unit also obtains first and second sensor signals (Pₘ, FS). The first sensor signal (Pₘ) reflects a measured position of the output shaft of the electric motor (131), which measured position constitutes an indication of the specified angular position (P). The second sensor signal (FS) reflects a magnitude of the applied force. The control unit checks the second sensor signal (FS) against a force-to-position mapping describing a linear relationship between the specified angular position (P) and an estimated magnitude of the applied force. Thus, the control unit may verify the relationship between the specified angular position (P) and the estimated magnitude.

## Description

### TECHNICAL FIELD

The present invention relates generally to retardation of rail vehicles. Especially, the invention relates to a brake actuator according to the preamble of claim 1. The invention also relates to a computer-implemented method performed by a control unit of the brake actuator, a computer program and a non-volatile data carrier storing such a computer program. Moreover, the invention pertains to a brake system including the proposed brake actuator.

### BACKGROUND

The braking system of a rail vehicle is employed to decelerate the rail vehicle, and usually also to implement a parking brake function. Typically, the same brakes are used both for service braking and emergency braking. Naturally, for all brake functions, it is of utmost importance that the braking system does not malfunction, or fail.

Today's rail vehicles are often regulated using compressed air, known as pneumatically regulated brakes. One disadvantage of such pneumatic brakes is that they cannot be regulated quickly. More important, an air leakage in a pneumatic braking system risks resulting in a severely reduced braking capacity. Therefore, inter alia for safety reasons, various kinds of electrically controlled braking systems begin to emerge on the market.

US 2020/0198605 shows a microcomputer-controlled electromechanical braking system that comprises an electromechanical braking control device and an electromechanical braking unit. The electromechanical braking control device comprises a braking microcomputer control unit, an electromechanical control unit and a standby power supply module. The braking microcomputer control unit receives a braking instruction signal sent by a driver or an automatic driving system, performs the calculation of a target braking force and braking management, and at the same time, can communicate with braking microcomputer control units of other vehicles in a train group.

Although, typically, an electromechanical braking system can be controlled substantially quicker than a pneumatic braking system, there is room for improving the response time of today's electromechanical braking solutions. For example, it must be ensured that the wear on the brake pads and/or the brake discs does not impair the functionality of the braking system.

### SUMMARY

The object of the present invention is therefore to offer a solution that mitigates the above problem and renders an electromechanical braking system of a rail vehicle less sensitive to various forms of wear on the components of this system.

According to one aspect of the invention, the object is achieved by a brake actuator for a rail vehicle, which brake actuator is configured to receive a brake command and in response thereto control an electrically operated brake unit to perform a braking operation. The brake actuator contains a control unit configured to generate a brake control signal based on the brake command. The brake control signal, in turn, is adapted to control an electric motor in the electrically operated brake unit such that an output shaft of the electric motor attains a specified angular position in which at least one pressing member is caused to apply a force against a rotating member being mechanically connected to a wheel axle of the rail vehicle. The applied force has a set point in the form of a target force specified by the brake command. The control unit is also configured to obtain a first sensor signal reflecting a measured position of the output shaft of the electric motor, which measured position constitutes an indication of the specified angular position.

The control unit is further configured to obtain a second sensor signal reflecting a magnitude of the applied force; and check the second sensor signal against a force-to-position mapping describing a linear relationship between the specified angular position and an estimated magnitude of the applied force.

The above brake actuator is advantageous because, in addition to enabling the at least one pressing member to be controlled exclusively based on the first sensor signal, it detects any deviations between the actual and the expected relationship between the specified angular position and the applied force. Thus, a consistent braking quality can be guaranteed.

According to one embodiment of this aspect of the invention, the control unit is configured to check the second sensor signal against the force-to-position mapping for at least two angular test positions. If, for the at least two angular test positions, the respective magnitudes of the force reflected by the sensor signal are displaced relative to a set of forces given by the force-to-position mapping by respective displacement amounts that fulfil a similarity criterion with respect to one another, the control unit is further configured to adjust a reference position for the force-to-position mapping to match the respective at least two test angular positions. Thus, for example a systematic shift of the force-to-position relationship due to wear of the brake pads and/or the brake disc may be compensated for in a straightforward manner.

According to another embodiment of this aspect of the invention, while the output shaft of the electric motor causes the applied force, the control unit is configured to check, if, during a test period, the second sensor signal fulfills a stability criterion. If the stability criterion is fulfilled, the control unit is further configured to obtain, after expiry of the test period, a magnitude of the force reflected by the sensor signal to represent one of the at least two angular test positions. Thereby, the braking function may be calibrated *online,* i.e. during an ongoing braking operation. Naturally, this is both efficient and convenient.

Preferably, the control unit is configured to generate the brake control signal until the first sensor signal attains a value indicating that the target force is estimated to have been reached. For example, the electric motor may be a brushless DC motor, and the brake control signal may cause a drive current to the electric motor to be produced, which drive current is produced until the specified angular position and target force have been reached. Thereby, the brake unit may be operated in a highly uncomplicated manner.

According to yet another embodiment of this aspect of the invention, the control unit is configured to await checking the second sensor signal against the force-to-position mapping until after having obtained the indication via the first sensor signal that the specified angular position has been attained. Namely, this reduces the verification time, and thus involves minimal latency.

According to still another embodiment of this aspect of the invention, the force-to-position mapping reflects an expected delay between generating the brake control signal and obtaining the second sensor signal. Thereby, the electric motor may be controlled to a position at which the target force is applied even quicker. Here, the delay is presumed to be introduced by the inertia of the electric motor as such, and/or at least one component included in a control loop for the electric motor, which control loop is arranged between the control unit and the electric motor.

The control loop may for example contain a driver unit, which is configured to generate a drive current to the electric motor based on the brake control signal. Alternatively, or additionally, the control loop may contain a filter unit configured to obtain an unfiltered sensor signal, e.g. from the above-mentioned absolute encoder, and in response thereto produce the second sensor signal as a lowpass-filtered version of the unfiltered sensor signal. This is beneficial because it reduces noise and renders the design less sensitive to movements, such as in the form of rumble and jerk.

According to a further embodiment of this aspect of the invention, the control unit is configured to generate an alarm, if, for the specified angular position, the second sensor signal reflects that the applied force is outside of an hysteresis margin from said li-near relationship. Namely, this indicates an anomaly that should be attended to.

According to another embodiment of this aspect of the invention, the brake actuator is configured to receive the brake command from a brake controller, which, in turn, is configured to send brake commands to at least one further brake actuator in the rail vehicle. Thereby, it is uncomplicated to incorporate the control unit the rail vehicle's braking system.

According to another aspect of the invention, the object is achieved by a computer-implemented method for controlling an electrically operated brake unit in a rail vehicle, which method is performed in processing unit of a control unit in the proposed brake actuator. The method involves receiving a brake command, and in response thereto controlling an electrically operated brake unit to perform a braking operation. Specifically, the method involves generating a brake control signal based on the brake command. The brake control signal is adapted to control an electric motor in the electrically operated brake unit such that an output shaft of the electric motor attains a specified angular position in which at least one pressing member is caused to apply a force against a rotating member being mechanically connected to a wheel axle of the rail vehicle. The applied force has a set point in the form of a target force specified by the brake command. The method also involves obtaining a first sensor signal reflecting a measured position of the output shaft of the electric motor, which measured position constitutes an indication of the specified angular position; and obtaining a second sensor signal reflecting a magnitude of the applied force. Further, the method involves checking the second sensor signal against a force-to-position mapping describing a linear relationship between the specified angular position and an estimated magnitude of the applied force. The advantages of this method, as well as the preferred embodiments thereof, are apparent from the discussion above with reference to the proposed brake controller.

According to a further aspect of the invention, the object is achieved by a computer program loadable into a non-volatile data carrier communicatively connected to a processing unit. The computer program includes software for executing the above method when the program is run on the processing unit.

According to another aspect of the invention, the object is achieved by a non-volatile data carrier containing the above computer program.

According to another aspect of the invention, the object is achieved by a brake system for a rail vehicle. The brake system includes an electrically operated brake unit configured to perform braking operations. The brake system also includes the above-proposed brake actuator, which is arranged to control the electrically operated brake unit. The above brake system is advantageous for the same reasons as presented above referring to the brake actuator.

According to one embodiment of this aspect of the invention, the electrically operated brake unit includes at least one pressing member and a rotating member being mechanically connected to a wheel axle of the rail vehicle. The electrically operated brake unit also includes an electric motor configured to receive brake the control signal generated by the brake actuator. The electric motor, in turn, contains an output shaft that is configured to attain a specified angular position in response to the control signal. In the specified angular position, the at least one pressing member is caused to apply a target force against the rotating member. Thereby, a wide range of brake operations may be effected efficiently and reliably.

According to another embodiment of this aspect of the invention, the brake system contains a Hall sensor and/or an absolute encoder, which is configured to generate the first sensor signal. Thus, the measured position of the output shaft of the electric motor may be conveniently reflected via the first sensor signal.

According to another embodiment of this aspect of the invention, the brake system contains a driver unit configured to generate a drive current to the electric motor based on the brake control signal. This allows for straightforward control of the at least one pressing member of the brake unit.

According to yet another embodiment of this aspect of the invention, the brake system includes a load-cell sensor, e.g. arranged in a gear-shaft mechanism between the electric motor and the at least one pressing member, which load-cell sensor is configured to generate an unfiltered sensor signal reflecting a magnitude of the force applied by at least one pressing member against the rotating member.

Preferably, the brake system further includes a filter unit configured to obtain the unfiltered sensor signal from the load-cell sensor, and in response thereto produce the second sensor signal as a lowpass-filtered version of the unfiltered sensor signal. This reduces the noise in the load-cell sensor signal and renders the design less sensitive to movements, such as in the form of rumble and jerk.

According to a further embodiment of this aspect of the invention, the alarm generated by the control unit, if, for the specified angular position, the second sensor signal reflects that the applied force is outside of an hysteresis margin from said linear relationship indicates: an error in the load-cell sensor, an encoder error, a mechanical malfunction, an electrical error and/or wear of the at least one pressing member. Thereby, adequate troubleshooting may be initiated based on the alarm.

Further advantages, beneficial features and applications of the present invention will be apparent from the following description and the dependent claims.

### BRIEF DESCRIPTION OF THE DRAWINGS

The invention is now to be explained more closely by means of preferred embodiments, which are disclosed as examples, and with reference to the attached drawings.
- Figure 1: schematically illustrates a brake system according to one embodiment of the invention;
- Figure 2: shows a graph exemplifying how a force-to-position mapping may be derived, which mapping describes a relationship between the specified angular position and the magnitude of the force applied by the at least one pressing member;
- Figure 3: exemplifies how the force-to-position mapping of Figure 2 may be employed according to one embodiment of the invention to control the at least one pressing member of the brake unit;
- Figure 4: shows a graph over a linear relationship between the specified angular position and the magnitude of the force applied by the at least one pressing member together with a second sensor signal;
- Figure 5: shows a graph illustrating test periods during which a brake actuator may be calibrated according to one embodiment of the invention;
- Figure 6: shows a block diagram illustrating a brake actuator according to one embodiment of the invention; and
- Figure 7: illustrates, by means of a flow diagram, the general method according to the invention;
- Figure 8: illustrates, by means of a flow diagram, a method according to one embodiment of the invention;
- Figures 9a-b: show graphs illustrating a force exerted by the at least one pressing member and a speed demand on the electric motor as respective functions of time according to one embodiment of the invention;
- Figure 10: illustrates how the control of the at least one pressing member may be verified during operation of a brake unit using the force-to-position mapping according to one embodiment of the invention; and
- Figure 11: illustrates, by means of a flow diagram, a method according to one embodiment the invention for determining whether a target position for a braking operation has been reached.

### DETAILED DESCRIPTION

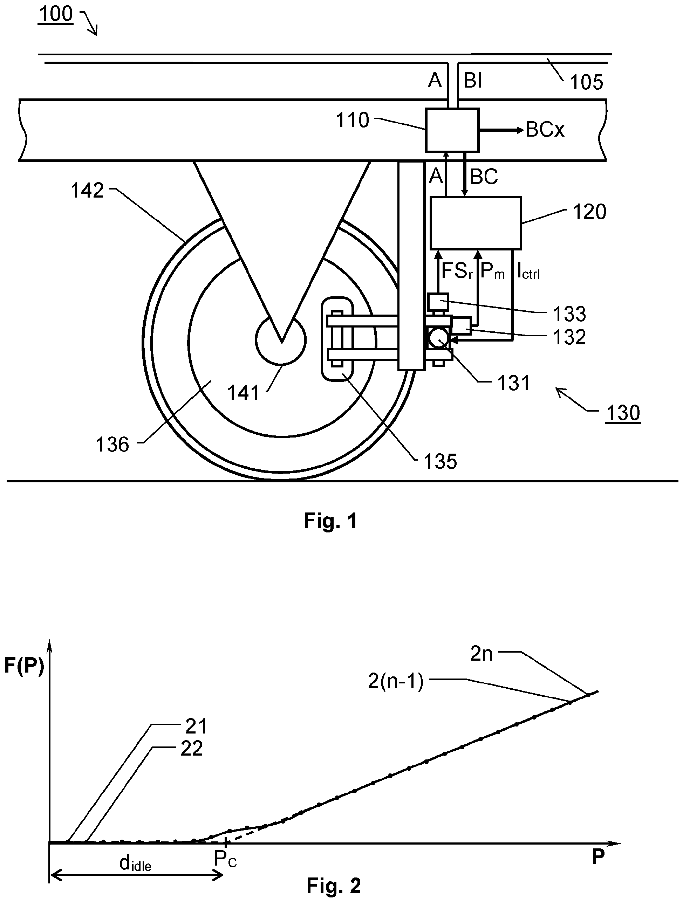

In Figure 1, we see a schematic illustration of a brake system according to one embodiment of the invention.

The brake system may include at least one brake controller 110 and a number of electrically operated brake units 130, which each is operated by a respective brake actuator 120. The brake actuator 120 is configured to receive a brake command BC, for example from the brake controller 110, and in response to the brake command BC control the electrically operated brake unit 130 to perform a braking operation. The braking operation typically involves applying a target force, which is specified by the brake command BC. However, of course, according to the invention, the braking operation may also involve releasing the brake, or reducing an already applied brake force.

The brake command BC, in turn, may be generated based on a brake instruction BI from a train driver, and/or an automatic functionality in the rail vehicle 100 in which the brake system is comprised. The brake instruction BI may be forwarded to the brake controller 110 via a data bus105 in the rail vehicle 100.

According to one embodiment of the invention, the brake controller 110 is configured to send brake commands BCx to at least one additional brake actuator in the rail vehicle 100. Namely, typically, in a rail vehicle brake system, each brake controller 110 is arranged to control two or more brake controllers, for example in one rail vehicle.

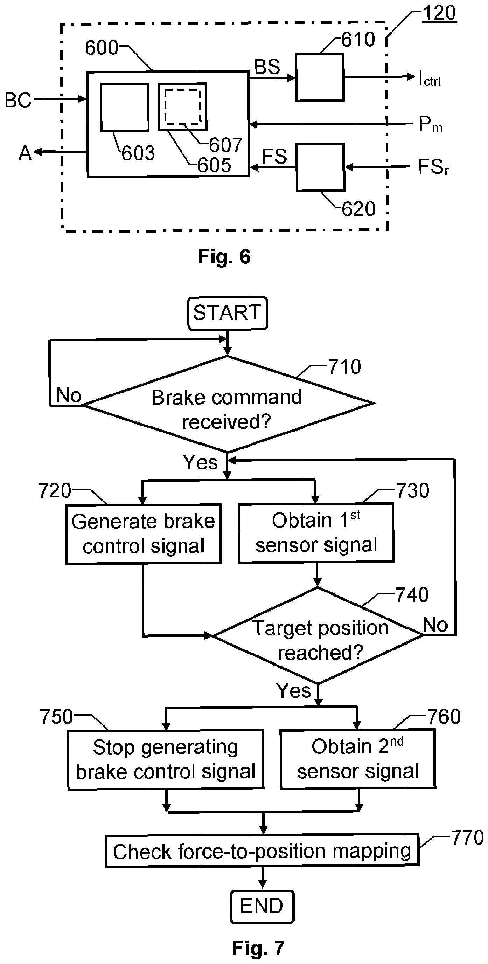

According to the invention, the brake actuator 120 contains a control unit 600 (see Figure 6), which is configured to generate a brake control signal BS based on the brake command BC. The brake control signal BS is adapted to control an electric motor 131 in the electrically operated brake unit 130 such that an output shaft of the electric motor 131 attains a specified angular position in which at least one pressing member 135 of the brake unit 130 is caused to apply the target force against a rotating member 136 of the brake unit 130, for example via a gear-shaft mechanism. The rotating member 136 is mechanically connected to a wheel axle 141 of the rail vehicle 100. Consequently, the brake force applied by the at least one pressing member 135 against the rotating member 136 influences any rotation of said wheel axle 141.

According to one embodiment of the invention, the electric motor 131 is a brushless DC motor. This type of motor is advantageous because it enables high torque and high precision in a relatively small-sized format. For example, the brushless DC motor may be operated around 3000 rpm, which vouches for swift control of the at least one pressing member 135.

The control unit 600 is further configured to obtain a first sensor signal Pₘ reflecting a measured position of the output shaft of the electric motor 131, which measured position indicates the specified angular position, e.g. via an absolute encoder 132 producing ubiquitous angular data on a digital format. Alternatively, or additionally, the first sensor signal Pₘ may be produced by a Hall sensor included in the electric motor 131. The Hall sensor, however, as such, is typically less sensitive and somewhat slower than the absolute encoder. Due to the fix mechanical relationship between the specified angular position and the force applied by the at least one pressing member 135 onto the rotating member 136, the first sensor signal Pₘ also constitutes an indication of the target force. These matters will be discussed in further detail below referring to Figures 2 to 10.

According to one embodiment of the invention, the control unit 600 is configured to generate the brake control signal BS until the first sensor signal Pₘ attains a value indicating that the target force F_{T} is estimated to have been reached.

As illustrated in Figure 6, according to one embodiment of the invention, the brake actuator 120 may include a driver unit 610 configured to generate a drive current I_{ctrl} based on the brake control signal BS, which drive current I_{ctrl} is adapted to control the electric motor 131, such that its output shaft rotates in a desired direction causing the at least one pressing member 135 to either move towards or away from the rotating member 136.

Figure 2 shows a graph exemplifying how the force F(P) applied to the rotating member 136 by the at least one pressing member 135 as a function of the angular position P of the rotating shaft of the electric motor 131. According to the invention, the relationship shown in Figure 2 is used to control the electric motor 131.

For each of a set of angular positions P, the respective force F(P) applied to the rotating member 136 is registered, e.g. by a load-cell sensor, and is plotted as a function of the angular position P. Figure 2 exemplifies data points 21, 22, ..., 2(n-1) and 2n respectively for such a set of angular positions P. As can be seen, the relationship between the angular position P and the respective force F(P) is almost perfectly linear except around an angular position Pc, where the at least one pressing member 135 begins to make contact with the rotating member 136. Preferably, therefore, the measurements of the force F(P) around the contact angular position Pc are discarded. Instead, a linear function based on measurements of the positions when the at least one pressing member 135 makes solid contact with the rotating member 136 is extrapolated to the intersection point with the P axis in order to determine the contact angular position Pc. The distance from P = 0 to P = Pc may represent the so-called idle distance d_{idle}, i.e. the distance covered by the at least one pressing member 135 from its starting position to the rotating member 136 when controlling the brake unit 130 to initiate a braking action after having been arranged to allow the axle 141 to rotate freely.

The above linear force-to-position relationship is mapped, such that for any given force F(P) there is a corresponding angular position P. Therefore, to attain a particular force F(P) it is sufficient to control the at least one pressing member 135 to a certain angular position P, i.e. without any feedback in terms of measurement of the force F(P) during the control process. This renders the control process extremely fast, which, in turn, translates into short braking distances.

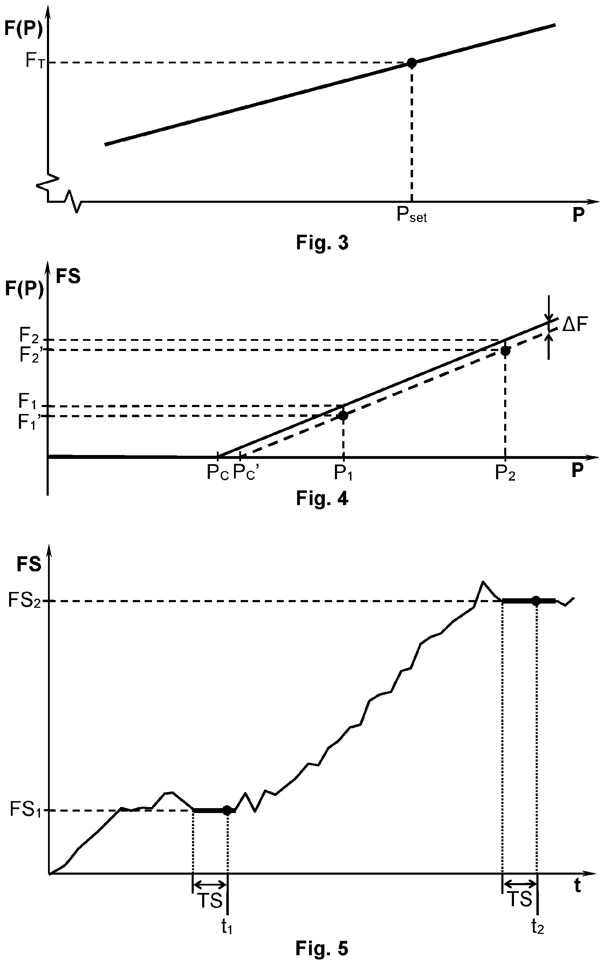

In other words, as illustrated in the diagram of Figure 3, the proposed control principle relies on an unambiguous relationship between the target force F_{T} specified by the brake command BC and a specified angular position Pₛₑₜ of the output shaft of the electric motor 131, such that the target force F_{T} may be attained by the output shaft of the electric motor 131 to the specified angular position Pₛₑₜ.

Due to wear of the at least one pressing member 135 and the rotating member 136, the force-to-position mapping must, however, be repeatedly updated/recalibrated during operation of the brake system. Preferably, in connection with placing the rail vehicle 100 into operation after a period of inactivity, e.g. at the beginning of each work shift, the force-to-position mapping is zeroed. This means that the contact angular position Pc is determined and a desired idle distance d_{idle} is set, for instance as described above.

Additionally, or alternatively, according to one embodiment of the invention, a calibration rod, or a similar tool with an accurately known physical dimension, may be employed to acquire an unambiguous reference point for the force-to-position mapping. Preferably at a service occasion, for example in connection with changing brake pads and/or the brake disc, a technician may adjust the at least one pressing member 135, e.g. represented by a pair of calipers, in relation to the rotating member 136 so that the at least one pressing member 135 and the rotating member 136 attain a known physical relationship to one another. For instance, the calibration rod may be fitted between first and second standardized positions inside the pair of calipers to define the known physical relationship serving as the unambiguous reference point for the force-to-position mapping. Once the force-to-position mapping has been zeroed using the calibration rod any adjustments of the at least one pressing member 135 from the original position are preferably recorded, such that the control unit 600 may keep track of the exact physical relationship between the at least one pressing member 135 and the rotating member 135 until a subsequent service occasion.

Moreover, at repeated occasions during operation, e.g. at every n:th braking, the control unit 600 is configured to verify that force-to-position mapping is accurate by obtaining feedback data about the force actually applied by the at least one pressing member 135 against the rotating member 136. Therefore, according to the invention, the control unit 600 is configured to obtain the first sensor signal Pₘ reflecting the measured position of the output shaft of the electric motor 131, which measured position constitutes an indication of the specified angular position P. The control unit 600 is also configured to obtain a second sensor signal FS that reflects a magnitude of the force applied by the at least one pressing member 135 onto the rotating member 136. For example, a load-cell sensor 133 in gear-shaft mechanism between the electric motor 131 and the at least one pressing member 135 may be configured to generate the second sensor signal FS. The control unit 600 is further configured to check the second sensor signal FS against the force-to-position mapping describing the linear relationship between the specified angular position P and an estimated magnitude of the force applied by the at least one pressing member 135 onto the rotating member 136.

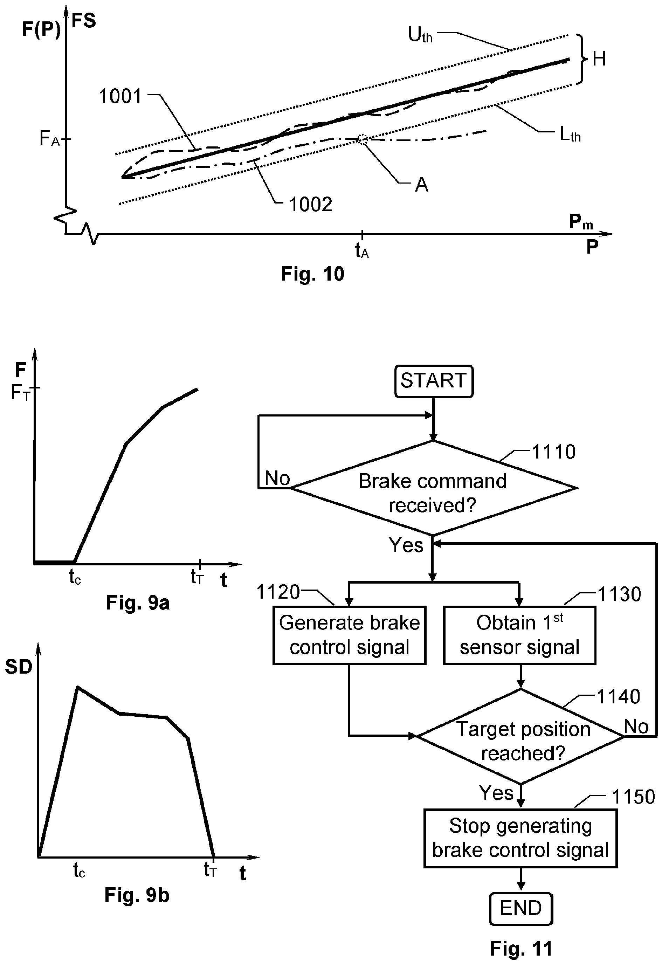

Figure 4 shows a graph over the linear relationship between the specified angular position P and the magnitude of the force F(P) applied by the at least one pressing member 135 together with the second sensor signal FS. According to one embodiment of the invention, the control unit 600 is configured to check the second sensor signal FS against the force-to-position mapping for at least two angular test positions, exemplified by P₁ and P₂ respectively in Figure 4. If, for the at least two angular test positions P₁ and P₂, the respective magnitudes of the respective force F₁' and F₂' reflected by the sensor signal FS are displaced relative to a set of forces F₁ and F₂ respectively given by the force-to-position mapping by respective displacement amounts ΔF that fulfil a similarity criterion with respect to one another, the control unit 600 is configured to adjust a reference position Pc' for the force-to-position mapping to match the at least two test angular positions P₁ and P₂ respectively. Consequently, the contact angular position Pc may be adjusted to compensate for wear on the at least one pressing member 135 and/or the rotating member 136 in a straightforward manner by simply adjusting the idle distance d_{idle} by an amount equal to the displacement of the contact angular position Pc. Of course, minor variations from the force-to-position mapping must be accepted without performing any modifications. This will be discussed below with reference to Figure 9.

In order to avoid introducing delay into the control process, the control unit 600 is preferably configured to await checking the second sensor signal FS against the force-to-position mapping until after having obtained the indication via the first sensor signal Pₘ that the specified angular position P has been attained, and thus also that the target force F_{T} has been attained.

Figure 5 shows a graph exemplifying how the second sensor signal FS may vary as a function of time t during braking. According to one embodiment of the invention, while the output shaft of the electric motor 131 causes the at least one pressing member 135 to apply force onto the rotating member 136, the control unit 600 is configured to obtain the second sensor signal FS. Specifically, the control unit 600 checks, if, during a test period TS, the second sensor signal FS fulfills a stability criterion, for example by only varying within a small range of values. If the stability criterion is fulfilled, after expiry of the test period TS, the control unit 600 is further configured to obtain a magnitude of the force reflected by the sensor signal FS to represent one of the above-mentioned angular test positions.

In Figure 5, a first test period TS expires at a first point in time t₁; at which a first magnitude FS₁ of the force reflected by the sensor signal FS is measured, and a second test period TS expires at a second point in time t₂; at which a second magnitude FS₂ of the force reflected by the sensor signal FS is measured. Thus, the first and second magnitudes FS₁ and FS₂ constitute examples two angular test positions P₁ and P₂ respectively that may be measured *online,* i.e. during operation of the brake actuator 120.

Referring now to Figure 10, which shows a first graph 1001 illustrating a relationship between the applied force F(P) reflected by the second sensor signal FS that is acceptable, and a second graph 1002 illustrating a relationship between the applied force F(P) reflected by the second sensor signal FS that causes the control unit 600 to generate the alarm A at a point in time t_{A} when the second graph 1002 falls outside of the lower threshold level Lth.

As mentioned above, minor variations from the force-to-position mapping must be accepted without performing any modifications to the mapping. For instance, fluctuations will occur due to stochastic errors in the first sensor signal Pₘ, e.g. resulting from rounding errors in the absolute encoder 132, the electric motor 131 slips and/or stalls temporarily when the at least one pressing member 135 is pressed against the rotating member 136. Alternatively, or additionally, extreme temperature variations and/or poor lubrication of the moving parts in the brake unit may cause unpredictable variations in the first sensor signal Pₘ. Therefore, the control unit 600 is preferably configured to accept variations around a hysteresis margin H from the linear relationship expressed by the force-to-position mapping. The hysteresis margin H may be defined as a band between an upper threshold level Uₜₕ above a lower threshold level Lₜₕ and below respectively the linear function describing the applied force F(P) as a function of the angular position P, as illustrated in Figure 10.

According to one embodiment of the invention, the control unit 600 is configured to generate an alarm A, if, for a specified angular position P, the second sensor signal FS reflects that the applied force F(P) is outside of the hysteresis margin H.

Depending on how the hysteresis margin H is broken, the alarm A may be supplemented by additional data, for example indicating an error in the load-cell sensor 133, error in the absolute encoder, a mechanical malfunction, e.g. in the at least one pressing member 135 or in the gear-shaft mechanism, an electrical error and wear of the at least one pressing member 135 and/or rotating member 136.

Figure 6 shows a block diagram illustrating a brake actuator 120 according to one embodiment of the invention. Here, the brake actuator 120 contains a driver unit 610 and a filter unit 620. The driver unit 610 is configured to generate a drive current I_{ctrl} to the electric motor 131 based on the brake control signal BS. The filter unit 620 is configured to obtain an unfiltered sensor signal FSᵣ, e.g. from the absolute encoder 132, and in response thereto, produce the second sensor signal FS as a lowpass-filtered version of the unfiltered sensor signal FSᵣ. It is generally advantageous to lowpass filter the unfiltered sensor signal FSᵣ because this renders the design less sensitive to movements, such as in the form of rumble and jerk.

In the embodiment shown in Figure 6, both the driver unit 610 and the filter unit 620 are included into the control loop for the brake unit. Inevitably, each of the units 610 and 620 introduces a respective delay in the control loop. Preferably, therefore, the above force-to-position mapping reflects the expected delay between generating the brake control signal BS and obtaining the second sensor signal FS, which expected delay depends on a signal passage through the units 610 and/or 620 whichever unit is included in the control loop. It is further preferable if the force-to-position mapping reflects an expected delay, which is due an inertia of the electric motor 131.

It is generally advantageous if the control unit 600 is configured to effect the above-described procedure by executing a computer program. Therefore, the control unit 600 may include a memory unit 605, i.e. non-volatile data carrier, storing a computer program 607, which, in turn, contains software for making processing circuitry in the form of a processor 603 in the control unit 600 execute the actions mentioned in this disclosure when the computer program 607 is run on the processor 603.

With reference to the flow diagram in Figure 7, we will now describe the computer-implemented method according to the invention which is performed in the processing unit 603 of the control unit 600.

In a first step 710, it is checked whether a brake command has been received. If so, steps 720 and 730 follow; otherwise, the procedure loops back and stays in step 710.

In step 720, a brake control signal is generated based on the brake command. The brake control signal is adapted to control the electric motor in the electrically operated brake unit, such that an output shaft of the electric motor attains a specified angular position in which at least one pressing member is caused to apply a force against a rotating member being mechanically connected to a wheel axle of a rail vehicle. Here, the applied force has a set point in the form of a target force that is specified by the brake command.

In step 730, a first sensor signal is obtained, which first sensor signal reflect a measured position of the output shaft of the electric motor. The measured position, in turn, constitutes an indication of the specified angular position.

After steps 720 and 730 follows a step 740 in which it is checked whether the at least one pressing member has reached the target position. If so, the procedure continues to steps 750 and 760; and otherwise, the procedure loops back and stays in step 740.

In step 750, the brake signal ceases to be generated. In parallel, or shortly thereafter, in step 760, a second sensor signal is obtained, which second sensor signal reflects a magnitude of the applied force.

Thereafter, in a step 770, the second sensor signal is checked against a force-to-position mapping describing a linear relationship between the specified angular position and an estimated magnitude of the applied force to enable verification of the relationship between the specified angular position and the estimated magnitude.

Subsequently, the procedure ends.

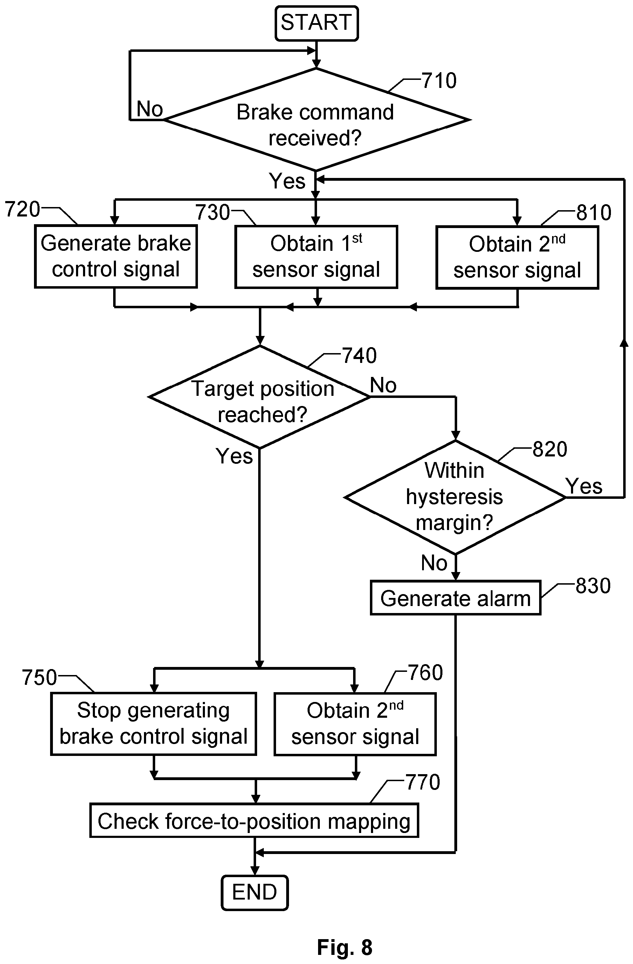

Figure 8 illustrates a computer-implemented method which may be performed in the processing unit 603 of the control unit 600 according to one embodiment of the invention.

In Figure 8, reference numerals that also occur in Figure 7 designate the same steps as described above referring to Figure 7. In the embodiment of the invention illustrated in Figure 8, the second sensor signal is obtained in parallel with steps 720 and 730. Thus, when checking whether the target position has been reached in step 740, it is further possible to check whether the target position *should* have been reached, for example given the time elapsed since the brake command signal began to be generated in step 720. Specifically, if in step 740 it is found that the target position has not yet been reached, a step 820 follows.

In step 820 it is checked whether the position indicated by the second sensor signal lies within a hysteresis margin, i.e. within an acceptable interval from the target position, for example as described above referring to Figure 10. If the position indicated by the second sensor signal lies within the hysteresis margin, the procedure loops back to steps 720, 730 and 820; and otherwise, a step 830 follows.

In step 830, an alarm is generated, which alarm may be supplemented by additional data indicating potential causes for the alarm.

The above-described embodiment of the invention is beneficial, since obtaining the second sensor signal in the control unit 600 in parallel with obtaining the first sensor signal enables the control unit 600 to generate the alarm already while generating the brake control signal BS. Thus, various supervision systems in the rail vehicle and/or the train driver may be informed about any malfunctions in the brake functionality at a very early stage of a braking procedure.

Referring to the flow diagram in Figure 11, we will now describe a computer-implemented method according to one embodiment of the invention which is performed in the processing unit 603 of the control unit 600.

In a first step 1110, it is checked whether a brake command has been received. If so, steps 1120 and 1130 follow; otherwise, the procedure loops back and stays in step 1110.

Step 1120 generates a brake control signal based on the brake command, which brake control signal is adapted to control an electric motor in an electrically operated brake unit such that an output shaft of the electric motor attains a specified angular position in which at least one pressing member is caused to apply a target force against a rotating member being mechanically connected to a wheel axle of the rail vehicle, which target force is specified by the brake command.

In step 1130, which is executed in parallel with step 1120, a first sensor signal is obtained, which reflects a measured position of the output shaft of the electric motor. Due to a one-to-one relationship between specified angular position and the target force, the measured position constitutes an indication of target force.

Subsequent to steps 1120 and 1130, a step 1140 checks whether the measured position designates that a target position equivalent to the target force has been reached. If so, a step 1150 follows; and otherwise, the procedure loops back to steps 1120 and 1130 for continued control of the at least one pressing member.

After step 1150, the procedure ends.

The process steps described with reference to each of Figures 7, 8 and 11 may be controlled by means of a programmed processor. Moreover, although the embodiments of the invention described above with reference to the drawings comprise processor and processes performed in at least one processor, the invention thus also extends to computer programs, particularly computer programs on or in a carrier, adapted for putting the invention into practice. The program may be in the form of source code, object code, a code intermediate source and object code such as in partially compiled form, or in any other form suitable for use in the implementation of the process according to the invention. The program may either be a part of an operating system, or be a separate application. The carrier may be any entity or device capable of carrying the program. For example, the carrier may comprise a storage medium, such as a Flash memory, a ROM (Read Only Memory), for example a DVD (Digital Video/Versatile Disk), a CD (Compact Disc) or a semiconductor ROM, an EPROM (Erasable Programmable Read-Only Memory), an EEPROM (Electrically Erasable Programmable Read-Only Memory), or a magnetic recording medium, for example a floppy disc or hard disc. Further, the carrier may be a transmissible carrier such as an electrical or optical signal which may be conveyed via electrical or optical cable or by radio or by other means. When the program is embodied in a signal, which may be conveyed, directly by a cable or other device or means, the carrier may be constituted by such cable or device or means. Alternatively, the carrier may be an integrated circuit in which the program is embedded, the integrated circuit being adapted for performing, or for use in the performance of, the relevant processes.

Figure 9a shows a general graph illustrating a force F exerted by the at least one pressing member 135 onto the rotating member 136 as a function of time t according to one embodiment of the invention.

Figure 9b shows a corresponding graph that illustrates a speed demand SD on the electric motor 131 as function of time t when the at least one pressing member 135 is controlled to apply the force F onto the rotating member 136.

Up to a point in time t_{c}, the at least one pressing member 135 moves towards the rotating member 136 without making any contact with it. Thus, until t_{c}, no force F is applied by the at least one pressing member 135, and, during this period, the speed demand SD is relatively high on the electric motor 131. Once the at least one pressing member 135 has made contact with the rotating member 136, the force F applied by the at least one pressing member 135 increases rapidly and the speed demand SD lowers gradually until the target force F_{T} has been attained.

Variations to the disclosed embodiments can be understood and effected by those skilled in the art in practicing the claimed invention, from a study of the drawings, the disclosure, and the appended claims.

The term "comprises/comprising" when used in this specification is taken to specify the presence of stated features, integers, steps or components. The term does not preclude the presence or addition of one or more additional elements, features, integers, steps or components or groups thereof. The indefinite article "a" or "an" does not exclude a plurality. In the claims, the word "or" is not to be interpreted as an exclusive or (sometimes referred to as "XOR"). On the contrary, expressions such as "A or B" covers all the cases "A and not B", "B and not A" and "A and B", unless otherwise indicated. The mere fact that certain measures are recited in mutually different dependent claims does not indicate that a combination of these measures cannot be used to advantage. Any reference signs in the claims should not be construed as limiting the scope.

It is also to be noted that features from the various embodiments described herein may freely be combined, unless it is explicitly stated that such a combination would be unsuitable.

The invention is not restricted to the described embodiments in the figures, but may be varied freely within the scope of the claims.

## Claims

1. A brake actuator (120) for a rail vehicle (100), which brake actuator (120) is configured to receive a brake command (BC) and in response thereto control an electrically operated brake unit (130) to perform a braking operation, **characterized in that** the brake actuator (120) comprises a control unit (600) configured to:
generate a brake control signal (BS) based on the brake command (BC), which brake control signal (BS) is adapted to control an electric motor (131) in the electrically operated brake unit (130) such that an output shaft of the electric motor (131) attains a specified angular position (P) in which at least one pressing member (135) is caused to apply a force against a rotating member (136) being mechanically connected to a wheel axle (141) of the rail vehicle (100), which applied force has a set point in the form of a target force (F_{T}) specified by the brake command (BC);
obtain a first sensor signal (Pₘ) reflecting a measured position of the output shaft of the electric motor (131), which measured position constitutes an indication of the specified angular position (P);
obtain a second sensor signal (FS) reflecting a magnitude of the applied force; and
check the second sensor signal (FS) against a force-to-position mapping describing a linear relationship between the specified angular position (P) and an estimated magnitude of the applied force.

2. The brake actuator (120) according to claim 1, wherein the control unit (600) is configured to:
check the second sensor signal (FS) against the force-to-position mapping for at least two angular test positions (P₁, P₂), and if, for the at least two angular test positions, the respective magnitudes of the force (F₁'; F₂') reflected by the sensor signal (FS) are displaced relative to a set of forces (F₁; F₂) given by the force-to-position mapping by respective displacement amounts (ΔF) that fulfil a similarity criterion with respect to one another;
adjust a reference position (Pc') for the force-to-position mapping to match the respective at least two test angular positions (P₁, P₂).

3. The brake actuator (120) according to claim 2, wherein, while the output shaft of the electric motor (131) causes the applied force, the control unit (600) is configured to:
check, if, during a test period (TS), the second sensor signal (FS) fulfills a stability criterion, and if the stability criterion is fulfilled,
obtain, after (t₁; t₂) expiry of the test period (TS), a magnitude (FS₁; FS₂) of the force reflected by the sensor signal (FS) to represent one of the at least two angular test positions (P₁, P₂).

4. The brake actuator (120) according to any of claims 2 or 3, wherein the control unit (600) is configured to generate the brake control signal (BS) until the first sensor signal (Pₘ) attains a value indicating that the target force (F_{T}) is estimated to have been reached.

5. The brake actuator (120) according to claim 4, wherein the control unit (600) is configured to await checking the second sensor signal (FS) against the force-to-position mapping until after having obtained the indication via the first sensor signal (Pₘ) that the specified angular position (P) has been attained.

6. The brake actuator (120) according to any of the preceding claims, wherein the force-to-position mapping reflects an expected delay between generating the brake control signal (BS) and obtaining the second sensor signal (FS), which delay is introduced by at least one of:
the electric motor (131), and
at least one component (610, 620) comprised in a control loop for the electric motor (131), which control loop is arranged between the control unit (600) and the electric motor (131).

7. The brake actuator (120) according to claim 6, wherein the control loop comprises at least one of:
a driver unit (610) configured to generate a drive current (I_{ctrl}) to the electric motor (131) based on the brake control signal (BS), and
a filter unit (620) configured to obtain an unfiltered sensor signal (FSᵣ) and in response thereto produce the second sensor signal (FS) as a lowpass-filtered version of the unfiltered sensor signal (FSᵣ).

8. The brake actuator (120) according to any one of the preceding claims, wherein, if, for the specified angular position (P), the second sensor signal (FS) reflects that the applied force (F(P)) is outside of an hysteresis margin (H) from said linear relationship, the control unit (600) is configured to generate an alarm (A).

9. The brake actuator (120) according to claim 8, wherein the control unit (600) is further configured to:
obtain the second sensor signal (FS) reflecting the magnitude of the applied force in parallel with obtaining the first sensor signal (Pₘ) reflecting the measured position of the output shaft of the electric motor (131), and
check whether the second sensor signal (FS) reflects that the applied force (F(P)) is outside of an hysteresis margin (H) while generating the brake control signal (BS).

10. The brake actuator (120) according to any of the preceding claims, wherein the control unit (600) is configured to receive the brake command (BC) from a brake controller (110), which, in turn, is configured to send brake commands (BCx) to at least one further brake actuator in the rail vehicle (100).

11. A computer-implemented method for controlling an electrically operated brake unit (130) in a rail vehicle (100), which method is performed in a control unit (600) of a brake actuator (120) in the rail vehicle, and which method comprises:
receiving a brake command (BC) and in response thereto
controlling an electrically operated brake unit (130) to perform a braking operation,
**characterized by** the method comprising:
generating a brake control signal (BS) based on the brake command (BC), which brake control signal (BS) is adapted to control an electric motor (131) in the electrically operated brake unit (130) such that an output shaft of the electric motor (131) attains a specified angular position (P) in which at least one pressing member (135) is caused to apply a force against a rotating member (136) being mechanically connected to a wheel axle (141) of the rail vehicle (100), which applied force has a set point in the form of a target force (F_{T}) specified by the brake command (BC);
obtaining a first sensor signal (Pₘ) reflecting a measured position of the output shaft of the electric motor (131), which measured position constitutes an indication of the specified angular position (P);
obtaining a second sensor signal (FS) reflecting a magnitude of the applied force; and
checking the second sensor signal (FS) against a force-to-position mapping describing a linear relationship between the specified angular position (P) and an estimated magnitude of the applied force.

12. The method according to claim 11, comprising:
checking the second sensor signal (FS) against the force-to-position mapping for at least two angular test positions (P₁, P₂), and if, for the at least two angular test positions, the respective magnitudes of the force (F₁'; F₂') reflected by the sensor signal (FS) are displaced relative to a set of forces (F₁; F₂) given by the force-to-position mapping by respective displacement amounts (ΔF) that fulfil a similarity criterion with respect to one another;
adjusting a reference position (Pc') for the force-to-position mapping to match the respective at least two test angular positions (P₁, P₂).

13. The method according to claim 12, wherein, while the output shaft of the electric motor (131) causes the applied force, the method comprises:
checking, if, during a test period (TS), the second sensor signal (FS) fulfills a stability criterion, and if the stability criterion is fulfilled,
obtaining, after (t₁; t₂) expiry of the test period (TS), a magnitude (FS₁; FS₂) of the force reflected by the sensor signal (FS) to represent one of the at least two angular test positions (P₁, P₂).

14. The method according to any of claims 12 or 13, comprising:
generating the brake control signal (BS) until the first sensor signal (Pₘ) attains a value indicating that the target force (F_{T}) is estimated to have been reached.

15. The method according to claim 14, comprising:
awaiting to check the second sensor signal (FS) against the force-to-position mapping until after having obtained the indication via the first sensor signal (Pₘ) that the specified angular position (P) has been attained.

16. The method according to any of claims 11 to 15, wherein, if, for the specified angular position (P), the second sensor signal (FS) reflects that the applied force (F(P)) is outside of an hysteresis margin (H) from said linear relationship, the method comprises:
generating an alarm (A).

17. A computer program (607) loadable into a non-volatile data carrier (605) communicatively connected to processing circuitry (603), the computer program (607) comprising software for executing the method according to any one of claims 10 to 15 when the computer program (607) is run on the processing circuitry (603).

18. A non-volatile data carrier (605) containing the computer program (607) of the claim 17.

19. A brake system for a rail vehicle (100), which brake system comprises an electrically operated brake unit (130) configured to perform braking operations, **characterized in that** the brake system comprises the brake actuator (120) according to any one of claims 1 to 10, which brake actuator (120) is arranged to control the electrically operated brake unit (130).

20. The brake system according to claim 19, wherein the electrically operated brake unit (130) comprises:
at least one pressing member (135),
a rotating member (136) being mechanically connected to a wheel axle (141) of the rail vehicle (100), and
an electric motor (131) configured to receive the brake control signal (BS) generated by the brake actuator (120), which electric motor (131) comprises an output shaft configured to attain a specified angular position (P) in response to the control signal (BS), and in which specified angular position (P) the at least one pressing member (135) is caused to apply a target force (F_{T}) against the rotating member (136).

21. The brake system according to claim 20, wherein the electric motor (131) is a brushless DC motor.

22. The brake system according to any one of claims 20 or 21, comprising at least one of a Hall sensor and an absolute encoder (132) configured to generate the first sensor signal (Pₘ) reflecting the measured position of the output shaft of the electric motor (131).

23. The brake system according to any one of claims 19 to 22, comprising a driver unit (610) configured to generate a drive current (I_{ctrl}) to the electric motor (131) based on the brake control signal (BS).

24. The brake system according to any one of claims 19 to 23, comprising a load-cell sensor (133) configured to generate an unfiltered sensor signal (FSᵣ) reflecting a magnitude of the force applied by at least one pressing member (135) against the rotating member (136).

25. The brake system according to claim 24, comprising a filter unit (620) configured to:
obtain the unfiltered sensor signal (FSᵣ) from the load-cell sensor (133) and in response thereto
produce the second sensor signal (FS) as a lowpass-filtered version of the unfiltered sensor signal (FSᵣ).

26. The brake system according to any one of claims 19 to 25, comprising a brake controller (110) configured to produce the brake command (BC) in response to a brake instruction (BI).

27. The brake system according to any one of claims 18 to 25, wherein the alarm (A) generated by the control unit (600) if, for the specified angular position (P), the second sensor signal (FS) reflects that the applied force (F(P)) is outside of an hysteresis margin (H) from said linear relationship indicates at least one of: an error in the load-cell sensor (133), an encoder error, a mechanical malfunction, an electrical error and wear of the at least one pressing member (135).
